Europäisches Patentamt

European Patent Office

Office européen des brevets

(11) Numéro de publication: **0 425 400 A1**

## (12) DEMANDE DE BREVET EUROPEEN

(21) Numéro de dépôt: 90460038.4

(22) Date de dépôt: 22.10.90

(51) Int. Cl.5: **A22C 21/00**

(30) Priorité: 23.10.89 FR 8914019

(43) Date de publication de la demande:
**02.05.91 Bulletin 91/18**

(84) Etats contractants désignés:
**BE CH DE DK ES GB GR IT LI NL SE**

(71) Demandeur: **SOCIETE D'ABATTAGE DE VOLAILLES ET LAPINS S.A.V.E.L.**
**Saint-Sébastien**
**F-29214 Lannilis(FR)**

(72) Inventeur: **Jaouen, Jacques**
**Résidence du Lia**
**F-29214 Lannilis(FR)**

Inventeur: **Leon, Gabriel**
**Prat-ar-Coum**
**F-29214 Lannilis(FR)**
Inventeur: **Leon, Laurent**
**Route du Bous, Saint-Pabu**
**F-29262 Ploudalmezeau(FR)**
Inventeur: **Ogor, Louis**
**Ménan**
**F-29232 Plouguerneau(FR)**

(74) Mandataire: **Schrimpf, Robert et al**
**Cabinet Regimbeau 11, rue Franz Heller,**
**Centre d'Affaires Patton, B.P. 19107**
**F-35019 Rennes Cédex(FR)**

(54) **Procédé et dispositif de bridage industriel de volailles.**

(57) Procédé et installation de bridage industriel de volailles préalablement abattues et plumées.

Le dispositif comprend un ensemble de contention (1) pouvant tourner autour d'un axe horizontal (Z-Z′), qui comprend un socle (4) de réception de la bride ainsi qu'un système d'immobilisation de la volaille comportant un berceau-support (3) et un bras pivotant (5) qui porte une mâchoire (50) ; il est prévu un ensemble manipulateur (2) mobile à la fois verticalement et horizontalement, cet ensemble portant une pince (20) dont les bras (21) sont adaptés pour saisir la bride et lui faire suivre les différents mouvements nécessaires au bridage.

Bridage des volailles avant leur commercialisation.

FIG.1

## PROCEDE ET DISPOSITIF DE BRIDAGE INDUSTRIEL DE VOLAILLES

La présente invention concerne un procédé et un dispositif pour le bridage industriel de volailles préalablement abattues et plumées, par exemple des coquelets ou des poulets.

Le bridage des volailles en vue de leur commercialisation sse fait traditionnellement à l'aide d'une bride - ou lien - souple et élastique en forme de boucle fermée.

La technique de bridage généralement utilisée en France et aussi de plus en plus dans certains états étrangers est assez particulière quant au placement de la bride sur la volaille En effet, la bride passe sur l'abdomen et derrière l'articulation du pilon sur la cuisse, contourne la jonction des ailes au corps, passe sur la partie avant des pilons (lesquels sont repliés contre les cuisses) en croisant à ce niveau l'autre brin symétrique de la bride, puis contourne le croupion en maintenant l'extrémité des pattes appliquées contre ce dernier.

Un tel bridage assure une bonne tenue des membres contre le corps de la volaille, facilitant les manipulations futures.

Jusqu'ici, la mise en oeuvre de cette technique dans les abattoirs industriels de volailles est réalisée manuellement en raison de la relative complexité du bridage et aussi des différences anatomiques inévitables, notamment dimensionnelles, entre les différentes volailles qui sont traitées par la chaîne de production ; l'opération de bridage n'est donc pas automatisée, de sorte que le poste de bridage manuel est traditionnellement un poste d'engorgement de la production, poste qui vient grèver lourdement le prix de revient de la production

Des tentatives de mécanisation de cette opération ont déjà été faites pour des techniques de bridage différentes et plus simples, selon lesquelles on réalise soit une simple attache des extrémités des pattes avec le croupion (voir par exemple FR-A-1 310 089 et US-A-3 509 594) soit une double attache des extrémités des pattes avec le croupion et de l'extrémité des pattes avec l'articulation des ailes (voir FR-A-2 522 475), mais sans passage de la bride derrière l'articulation du pilon sur la cuisse et contre l'abdomen, si bien que les enseignements tirés de ces techniques connues ne sont pas exploitables dans la technique plus sophistiquée de bridage qui fait l'objet de la présente invention.

C'est pourquoi l'invention vise à automatiser l'opération de bridage du genre énoncé plus haut, en proposant un procédé et un dispositif de bridage industriel des volailles qui soit sûr et efficace, ceci en dépit des variations d'ordre anatomique, notamment dimensionnelles, se rencontrant dans la chaîne de production, le procédé et l'installation autorisant en outre une cadence de traitement élevée, compatible avec les lignes de production situées en amont (chaîne d'abattage, de plumage, de ressuage, etc).

A cet effet, selon le procédé de l'invention, dans lequel les volailles sont bridées au moyen d'une bride en forme de boucle souple et élastique, il est prévu les étapes successives suivantes :

a) on place la volaille dans un ensemble de contention, en position dressée, partie avant tournée vers le bas, pattes et croupion dirigés vers le haut, ledit ensemble de contention étant fixé sur un socle qui peut tourner autour d'un axe vertical coïncidant approximativement avec l'axe longitudinal de la volaille, ce socle retenant la bride de sorte que celle-ci ait la configuration d'une boucle située dans un plan sensiblement horizontal et entourant ledit axe vertical ;

b) on immobilise la volaille dans ledit ensemble de contention ;

c) on saisit au moyen d'une pince la zone de la bride qui est située du côté dorsal ;

d) on écarte la pince du socle en la faisant monter de façon à faire passer la bride sous les ailes en la tirant vers le haut ;

e) on place la zone de bride saisie au-dessus du croupion, contre l'abdomen et l'arrière des cuisses ;

f) on lâche la bride ;

g) on fait pivoter le socle d'un demi-tour autour de son axe ;

h) on saisit, au moyen de la même pince, la partie opposée de la bride toujours retenue au niveau du socle, côté ventral ;

i) on écarte la pince du socle en la faisant monter de façon à emprisonner les ailes, et on l'amène au-dessus de la volaille, sensiblement à l'aplomb du croupion et de l'extrémité des pattes ;

j) la bride étant toujours maintenue par la pince, on fait pivoter le socle d'une demi-tour autour de son axe de manière à croiser la bride sur les pattes ;

k) on place la zone de bride saisie à l'arrière du croupion de manière à enserrer celui-ci en même temps que les extrémités des pattes ;

l) on lâche la bride ;

m) on retire la volaille bridée de l'ensemble de contention.

De préférence, la volaille se trouve en appui dans l'ensemble de contention par sa face dorsale et y est immobilisée au moyen d'une mâchoire qui s'applique contre les pattes, cette immobilisation étant avantageusement complétée par une broche qui pénètre dans l'ouverture du bréchet

De préférence, avant l'étape g , on déplace la mâchoire pour resserrer les pattes contre le corps de la volaille, tandis qu'avant l'étape k on presse le croupion vers le bas.

Le dispositif selon l'invention est caractérisé en ce qu'il comprend d'une part un ensemble de contention apte à retenir la volaille en position dressée, partie avant tournée vers le bas, pattes et croupion dirigés vers le haut, cet ensemble de contention étant porté par un socle qui peut tourner autour d'un axe vertical coïncidant approximativement avec l'axe longitudinal de la volaille, ce socle étant adapté pour retenir une bride élastique en forme de boucle dans un plan sensiblement horizontal de façon que la boucle entoure ledit axe vertical, et d'autre part un ensemble manipulateur qui est mobile verticalement et horizontalement par rapport audit berceau-support et comporte une pince apte à saisir et retenir une certaine zone de ladite bride.

Par ailleurs, selon un certain nombre de caractéristiques avantageuses, mais non limitatives du dispositif selon l'invention :
- ledit ensemble de contention comporte un berceau-support apte à soutenir la volaille en position dressée, ce berceau-support étant muni d'une garniture d'appui dorsal de la volaille ;
- ledit ensemble de contention comporte un bras pivotant qui est articulé sur un axe horizontal au niveau du socle et qui porte une mâchoire adaptée pour s'appliquer contre les pattes de la volaille ;
- ladite mâchoire est articulée sur le levier autour d'un axe horizontal ;
- ladite mâchoire comporte deux doigts indépendants articulés formant un "V", sollicités par un ressort dans le sens de la fermeture du "V" ;
- ledit bras pivotant porte une broche apte à s'engager dans l'ouverture du bréchet de la volaille ;
- le socle a un contour généralement circulaire et présente une gorge périphérique de retenue de la bride, des découpes étant prévues à sa périphérie qui permettent à la pince de saisir la bride ;
- ladite pince a la forme d'un étrier en "U" dont les bras sont disposés horizontalement et présentent une encoche de retenue de la bride ;
- l'ensemble manipulateur comporte une plaquette articulée sur la pince et apte à venir s'appliquer contre le croupion de la volaille pour presser celui-ci vers le bas ;
- les ensembles de contention et manipulateur sont tous deux portés par un équipage mobile se déplaçant en circuit fermé, des chemins de came fixes disposés le long de sa trajectoire assurant les différents mouvements du dispositif au cours de l'opération de bridage.

L'invention vise également une installation de bridage qui comporte une pluralité de dispositifs identiques selon l'invention, lesquels sont portés par un équipage commun.

D'autres caractéristiques et avantages de l'invention apparaîtront de la description et des dessins annexés qui en présentent un mode de réalisation préférentiel.

Sur ces dessins :
- la figure 1 est une vue générale schématique, en perspective, du dispositif ;
- les figures 2a, 2b, 2c et 2d sont des vues schématiques montrant différentes étapes successives dans la mise en oeuvre du procédé de bridage ;
- la figure 2e montre la volaille bridée ;
- la figure 3 est une vue de dessus schématique de la mâchoire qui équipe l'ensemble manipulateur ;
- la figure 4 est une vue de côté schématique, partiellement coupée, de l'ensemble de contention, cette vue montrant de quelle façon se fait la mise en place de la volaille dans cet ensemble ;
- la figure 5 est une vue de dessus schématique du socle de l'ensemble de contention, coupée par le plan V-V de la figure 4 ;
- la figure 5a est une vue partielle analogue à la figure 5 qui illustre la manière dont la pince effectue une traction sur la bride ;
- les figures 6 à 9 sont des vues analogues à la figure 4 qui montrent différentes étapes du processus de bridage ;
- la figure 10 est une vue de droite schématique du dispositif représenté à la figure 9.

Le dispositif représenté sur les figures comprend deux parties principales, un ensemble de contention référencé 1 et un ensemble manipulateur référencé 2. L'ensemble 1 a pour fonction de supporter et retenir la volaille durant l'opération ; l'ensemble 2 a pour fonction de manipuler la bride.

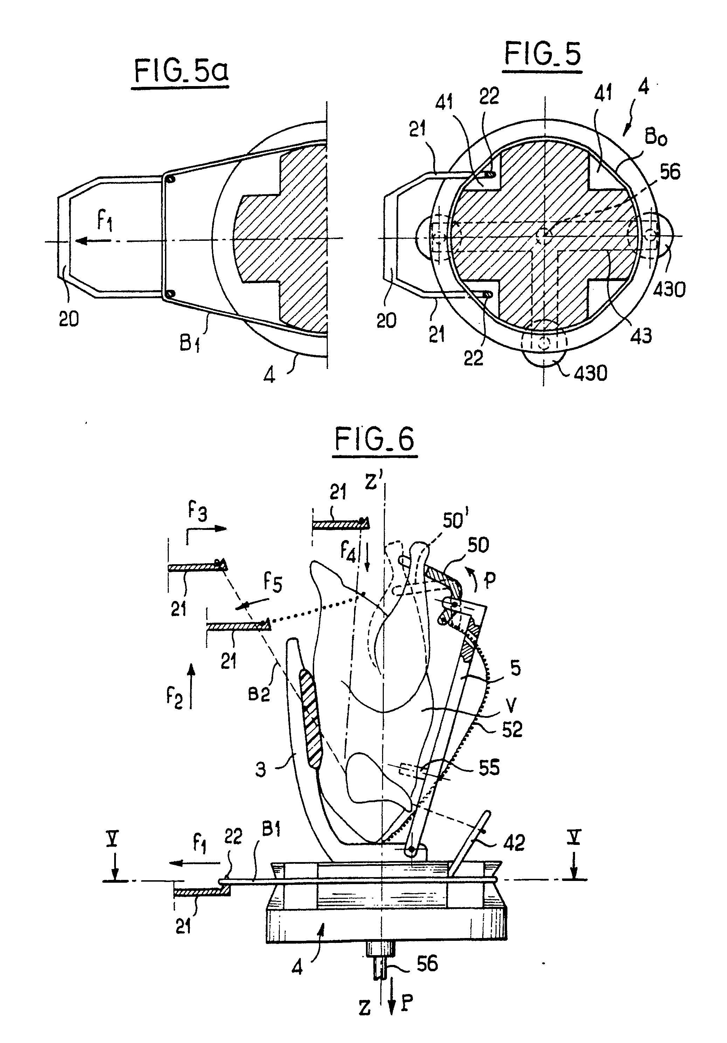

L'ensemble 1 comprend un berceau-support 3 qui a la forme générale d'une coquille à peu près en arc de cylindre, d'axe vertical. Le berceau-support 3 est fixé par des moyens appropriés, par exemple par vissage, sur un socle 4. Celui-ci a une base cylindrique d'axe vertical Z-Z' ; sa partie supérieure a une forme générale biconique de manière à présenter une gorge périphérique 40 ; cette gorge est destinée à recevoir la bride, comme on le verra plus tard. Au niveau de cette gorge sont prévues quatre découpes ou échancrures 41 (voir notamment figure 5) ; celles-ci permettent de ménager entre la bride et le socle des espaces autorisant la préhension de la bride.

Le socle 4 est monté rotatif autour de l'axe Z-Z' ; il est porté et guidé dans une plaque horizontale 60 solidaire d'un bloc support 6.

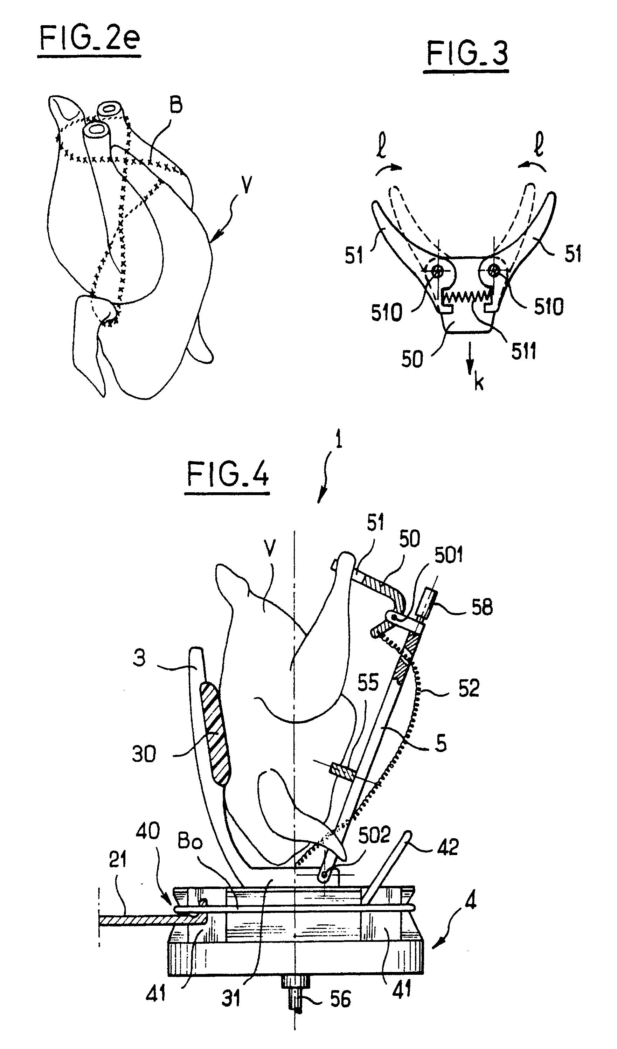

En face du berceau-support 3, dont la concavité est tournée vers l'axe Z-Z', de l'autre côté de cet axe, est monté un bras pivotant 5 ; ce dernier est articulé à sa partie inférieure sur un axe horizontal 500 porté par le socle. A son extrémité supérieure, le bras 5 est coudé en direction de l'axe Z-Z′ et la partie coudée porte une mâchoire 50. Cette dernière est portée par un petit levier articulé sur un axe horizontal 501. La mâchoire comporte deux doigts indépendants 51 qui sont disposés en "V" ; comme on le voit à la figure 3, qui représente la mâchoire vue de dessus, chacun des doigts 51 est articulé autour d'un axe vertical 510, et un petit ressort 511 tend constamment à maintenir les deux doigts dans une position resserrée, contre des butées appropriées ; cette position resserrée - de "fermeture" du "V" -est illustrée par des traits interrompus à la figure 3.

Un câble flexible 52 est prévu qui permet de commander le mouvement de basculement de la mâchoire autour de l'axe 501 ; ce câble traverse une lumière prévue dans le bras 5 de manière à être correctement guidé à la partie haute du bras ; il passe vers l'extérieur du dispositif de contention 1 de manière à ne pas obstruer l'espace intérieur qui doit recevoir la volaille, et par son extrémité inférieure est attaché à une tige verticale 56 ; cette tige traverse axialement le socle et est guidée en translation dans celui-ci et dans un fourreau 561 qui fait saillie vers le bas au-dessous du socle ; la tige 56 porte un galet suiveur de came 57 et est sollicitée vers le bas par un ressort de compression 56 qui applique élastiquement ce galet 57 contre un chemin de came fixe 570.

Un ressort de traction 54 dont une extrémité est accrochée au berceau-support 3 et l'autre à une patte 53 solidaire du levier 5, sollicite ce dernier en direction du berceau 3, c'est-à-dire vers l'espace intérieur du dispositif de contention.

Sur la tige 5 est monté un téton cylindrique, - ou broche - 55, destiné à pénétrer dans l'ouverture du bréchet (juste au-dessus du sternum) lorsque la volaille se trouve positionnée dans l'ensemble 1.

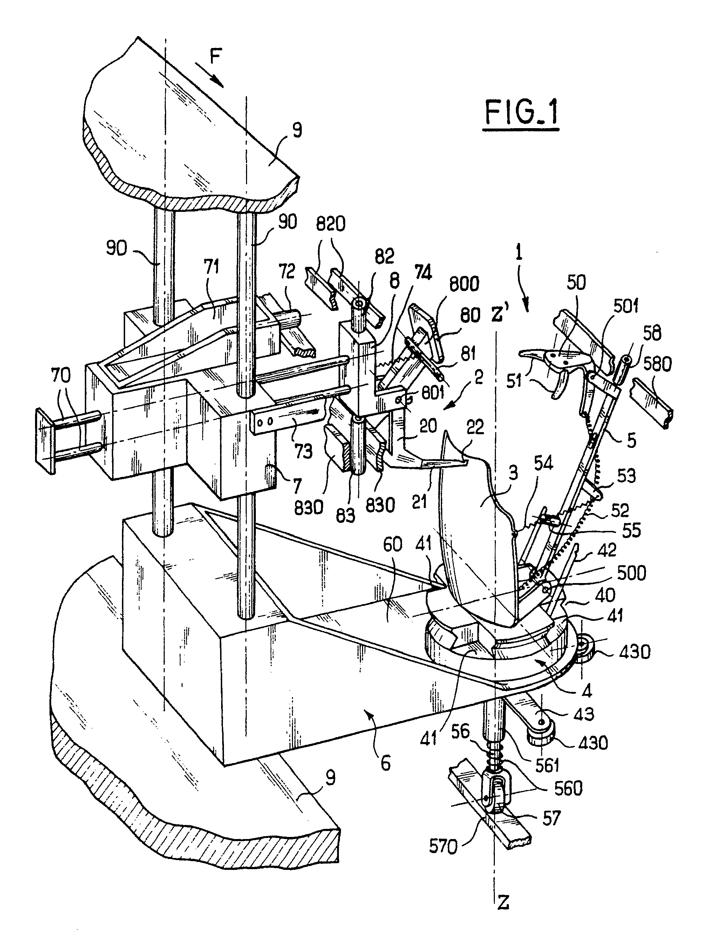

Le socle 4 porte à sa partie inférieure une croix 43, par exemple à trois branches, qui s'étend sous la plaque 60, dans un plan horizontal (voir figures 1 et 5). Cette croix porte des galets 430 qui, comme on l'expliquera plus loin, sont destinés à coopérer avec des cames ou des butées (non représentées) pour faire tourner le socle sur lui-même, autour de l'axe Z-Z′. Il faut noter que la rotation du socle n'entraîne pas la rotation de la tige 56, des moyens appropriés dont la conception est à la portée de l'homme du métier étant prévus pour que celle-ci garde toujours la même orientation par rapport au chemin de came 570.

Le socle 4 porte une paire de tiges parallèles obliques 42, de faible longueur, qui sont disposées symétriquement dans deux échancrures 41 du socle ; elles sont inclinées vers le haut et vers l'extérieur par rapport à l'ensemble de contention ; de petites encoches sont avantageusement prévues au voisinage de l'extrémité libre de ces tiges 42.

L'ensemble manipulateur 2 comprend une tête de montage 8 qui est déplaçable à la fois horizontalement et verticalement. Cette tête 8 porte une pince, ou fourche 20, qui en vue de dessus a la forme d'un "U" présentant deux branches horizontales 21. L'écartement des branches 21 correspond sensiblement à l'écartement mutuel des zones centrales de deux échancrures 41 voisines, de sorte que les extrémités de ces branches peuvent venir se positionner dans une paire d'échancrures, et que leurs extrémités libres, pourvues d'encoches 22, viennent se placer en-dessous et au-delà de la bride B 0 retenue par le socle (voir figure 5).

La tête 8 porte également un élément pivotant 800 qui est articulé autour d'un axe horizontal 801 disposé transversalement (c'est-à-dire perpendiculairement aux branches 21).

L'élément 800 porte une palette ou plaquette 80 ; celle-ci est normalement maintenue redressée sous l'effet d'un petit ressort de traction 74. Lorsque l'élément 800 est rabattu vers le bas, la plaquette 80 a une position voisine de l'horizontale et est située entre les deux bras 21.

La tête 8 est portée par une paire de tiges horizontales 70 qui sont guidées en translation dans un chariot 7 de manière à se rapprocher (avance) ou à s'écarter (recul) de l'ensemble de contention 1. Ce chariot porte une butée 73 tournée vers la tête 8 dont le rôle est de faire basculer l'élément 800 en s'appliquant contre une tige transversale 81 portée par ce dernier, lorsque la tête 8 a reculée d'une certaine course.

Le bloc-support 6 est monté sur un équipage mobile 9 dont le mouvement est figuré par la flèche F à la figure 1 ; dans l'exemple représenté, cet équipage est constitué de deux plateaux horizontaux parallèles, le plateau inférieur portant le bloc 6 ; les deux plateaux 9 sont reliés par une paire de colonnes verticales 90 qui assurent le guidage en translation du chariot 7.

Il est prévu à la périphérie des plateaux 9 une pluralité de dispositifs régulièrement répartis qui sont identiques à celui qui vient d'être décrit. L'équipage mobile constitue donc un manège qui permet de recevoir simultanément plusieurs volailles qui sont soumises successivement aux différentes étapes de bridage, ce qui permet d'obtenir une cadence de production élevée.

Au cours du déplacement de l'équipage mobile 9, les différents mouvements des organes mobiles constitutifs du dispositif sont commandés par des chemins de came fixes disposés le long de la trajectoire.

Ainsi, les mouvements de translation verticale du chariot 7 sont régis par un galet suiveur 72, d'axe horizontal, porté par une pièce 71 fixée sur le dessus du chariot. Ce galet suit un chemin de came 720 qui en commande la montée ; la descente est obtenue simplement sous l'effet de la gravité (poids du chariot et des différents organes qui l'équipent).

L'avance et le recul du chariot sont des mouvements commandés par des galets suiveurs 82, 83 d'axe vertical coopérant avec des chemins de came 820, 830.

Le basculement du bras 5, dans le sens de son écartement vers l'extérieur, à l'encontre du ressort 54, est commandé par un galet 58 monté à l'extrémité haute du bras et coopérant avec un chemin de came 580.

Comme déjà dit plus haut, le basculement de la mâchoire 50 autour de l'axe 501 est réalisé au moyen d'un galet 57 suivant une came 570 via la tringlerie flexible 52 ; c'est le ressort 560 qui commande la descente de la tige 57.

Le pivotement de la croix 43 qui commande la rotation du socle 4 - et corrélativement la rotation de l'ensemble du dispositif de contention 1 - est réalisé par deux systèmes de came ou de butée appropriés, non représentés, disposés le long de la trajectoire de l'équipage 9, ces systèmes commandant chacun le pivotement du socle sur un demi-tour.

Les figures 2a à 2d illustrent la manière dont une bride souple et élastique B est mise en place sur une volaille "V". Dans l'exemple représenté la volaille est un coquelet à pattes courtes (dépourvues de moignons à l'extrémité des pilons), et dont la tête a été coupée.

Pour réaliser le bridage, il faut tout d'abord faire passer la bride B contre le poitrail, la tirer vers le dos en l'engageant sous les ailes, la tirer vers le haut pour la faire passer au-delà du croupion, et la déposer contre l'abdomen, au niveau de la jonction des pilons et des cuisses (mouvement illustré par les flèches f à la figure 2a).

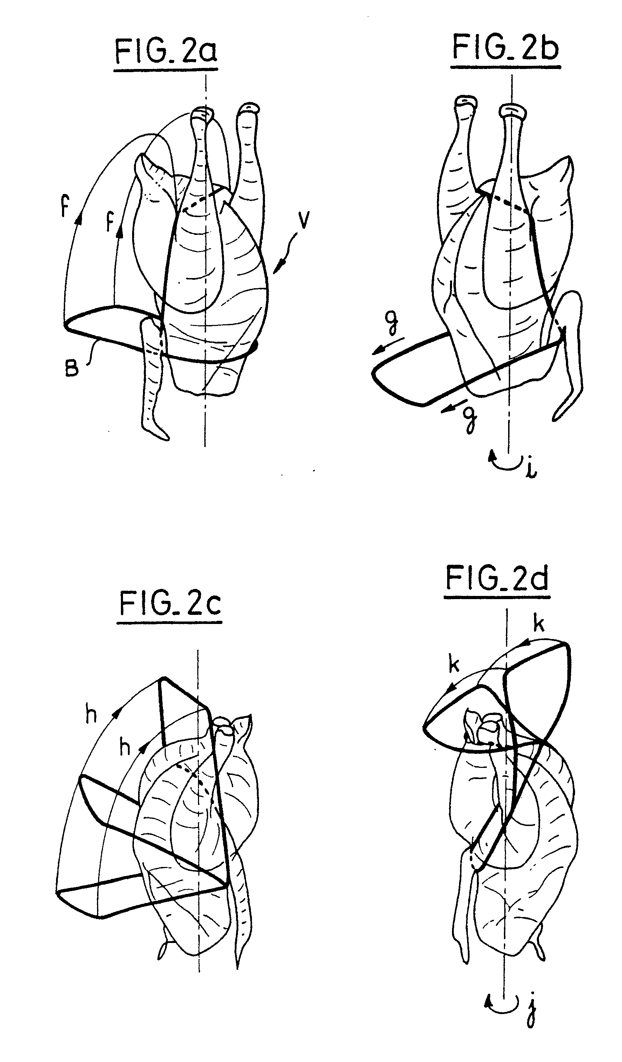

Ensuite, on tire la zone de bride qui se trouve côté poitrail (flèches g à la figure 2b), on fait remonter cette zone au niveau de l'extrémité des pattes, après avoir resserré celles-ci contre le pilon (flèches h , figure 2c). Enfin, on retourne sur elle-même d'un demi-tour la partie haute de la bride pour la faire se croiser et on la fait passer au-delà de l'ensemble pattes resserrées - croupion, pour la déposer contre celui-ci (flèches k , figure 2d). Sur les figures 2b et 2d on a représenté, respectivement par les flèches i et j , le mouvement de rotation de la volaille qui permet d'une part de présenter à la pince une zone de préhension de la bride décalée de 180° par rapport à la zone de prise précédemment effectuée (en référence à la figure 2a) et d'autre part, respectivement, de réaliser le croisement de la bride sur elle-même.

Nous allons maintenant expliquer, en nous référant plus précisément aux figures 4 à 10, de quelle manière se fait une opération de bridage au moyen du dispositif qui vient d'être décrit.

A un certain emplacement en vis-à-vis de la trajectoire de l'équipage mobile 9 se trouve un poste de chargement et de déchargement manuel de l'installation, poste où se trouve un opérateur.

Cet opérateur met en place dans le dispositif qui se présente devant lui les volailles en l'occurence les coquelets à brider.

Pour cela, à ce poste, l'ensemble de contention se trouve à l'état ouvert, concavité du berceau-support 3 tournée vers l'opérateur, et bras 5 basculé vers l'extérieur.

L'opérateur place la volaille "V" dans l'ensemble de contention en position sensiblement verticale, croupion et pattes dirigés vers le haut (voir figure 4).

Le berceau-support 3 est muni d'une garniture souple 30, par exemple en matière plastique, qui sert à l'appui dorsal de la volaille, celle-ci étant supportée à sa partie inférieure par une partie horizontale 31, éventuellement incurvée, du berceau 3.

Préalablement à la mise en place de la volaille, l'opérateur a placé dans la gorge 40 du socle 4 une bride élastique B 0 en forme de boucle souple et élastique ; celle-ci est de préférence à l'état légèrement tendu dans la gorge.

L'opérateur fait ensuite basculer le bras 5 en direction de la volaille de manière à faire pénétrer la broche 55 dans l'ouverture du bréchet à la base du sternum et à appliquer les doigts 51 de la mâchoire 50 contre l'extrémité des pattes. La volaille se trouve ainsi immobilisée dans l'ensemble 1.

Dans cette position initiale, qui est représentée à la figure 4, les bras 21 de la pince 20 se trouvent engagés à l'intérieur des échancrures 41 du socle et leur extrémité se trouve donc juste en-dessous de la bride B 0.

La volaille se trouvant en place dans l'ensemble 1, l'équipage mobile 9 va lui faire effectuer une révolution complète au cours de laquelle va s'effectuer le bridage. Pour cela, les chemins de came 830, 820 et 720 vont provoquer un déplacement de la pince 20 ; celui-ci, illustré à la figure 6, consiste tout d'abord à saisir la bride (référencée B1) et à effectuer une traction sur celle-ci dans le sens du recul (flèche f1, figures 6 et 5a) ; ensuite, la pince se soulève (flèche f2) jusqu'à une position située à un niveau légèrement supérieur à celui du croupion. Durant ce mouvement, la bride contourne la jonction des ailes avec le corps de la volaille, prenant appui au niveau de cette jonction ; la position intermédiaire de la bride représentée en traits interrompus porte la référence 82. Ensuite, la pince 20 effectue un mouvement horizontal en direction de la volaille (flèche f3) et une descente verticale au-delà du croupion (flèche f4) ; le mouvement de la pince continue obliquement vers le bas et dans le sens du recul (flèche f5) ce qui a pour effet de déposer la bride contre l'abdomen au-delà du croupion, puis de lâcher cette bride.

On notera que durant la traction de la bride vers le haut, la zone basse de la bride a quitté la gorge pour se placer sur les tiges 42, le cas échéant dans les petites encoches prévues sur ces tiges.

A l'instant où la bride est ainsi déposée, la mâchoire 50 est soumise à un pivotement (flèche p) provoqué par la descente de la tige de commande 56 (flèche P), ce qui provoque un resserrement des pattes illustré à la figure 6 par des traits interrompus, la mâchoire 50 étant référencée 50′ après basculement.

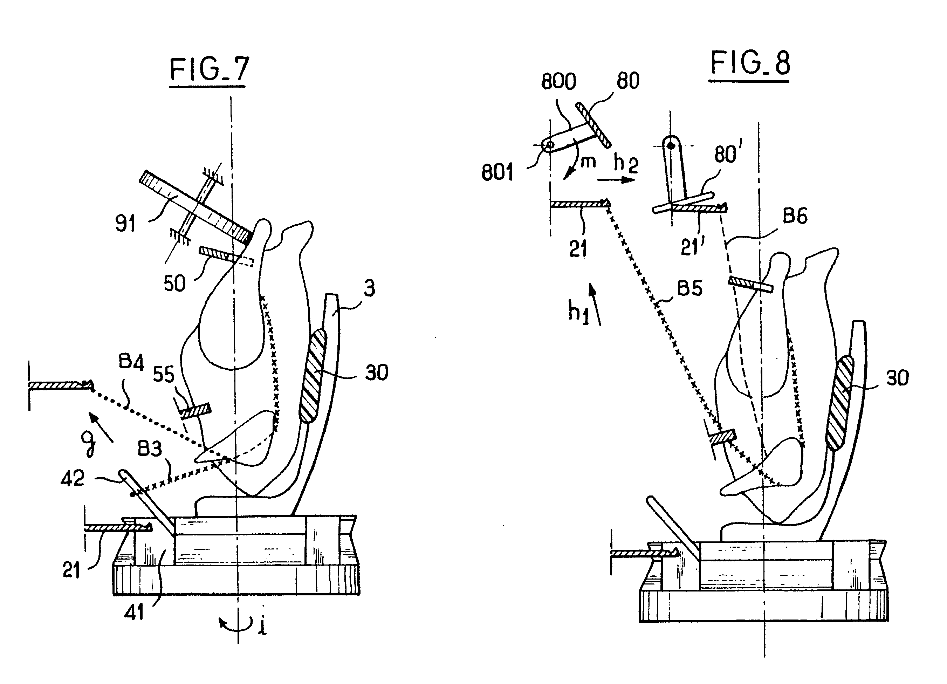

L'un des systèmes de came prévu à cet effet sur la trajectoire provoque alors la rotation d'un demi-tour de la croix 43, ce qui réalise un pivotement correspondant de l'ensemble 1. Tout de suite après ce mouvement de rotation, la pince 20 est déplacée de telle manière que ses bras 21 viennent à nouveau se positionner dans les échancrures 41 qui se sont présentées en vis-à-vis de l'ensemble manipulateur 2. La pince est ensuite soumise à un mouvement simultané de recul et d'ascension, figuré par la flèche g à la figure 7, ce qui a pour effet de saisir la bride référencée B3 qui se trouvait retenue par les tiges 42, et d'effectuer une traction sur cette bride vers le haut ; la position intermédiaire de montée de la bride est référencée B4. Au cours de cette ascension, la volaille est soumise à une action supplémentaire de resserrement des pattes au moyen d'un disque presseur 91 qui se trouve situé à un poste fixe le long de la trajectoire des volailles.

Le mouvement d'ascension et de recul de la pince 20 se poursuit jusqu'à ce que cette pince atteigne un niveau légèrement plus élevé que celui des extrêmités des pattes et du croupion (flèche h1, figure 8, sur laquelle la bride est référencée B5). A ce stade, la tige 81 rencontre la butée 73 ce qui provoque le basculement vers le bas de la plaquette 80 (flèche m). La pince avance alors selon une trajectoire sensiblement horizontale, la plaquette référencée 80′ étant située entre les deux bras 21′ (flèche h2, figure 8, où la bride à ce stade est référencée B6).

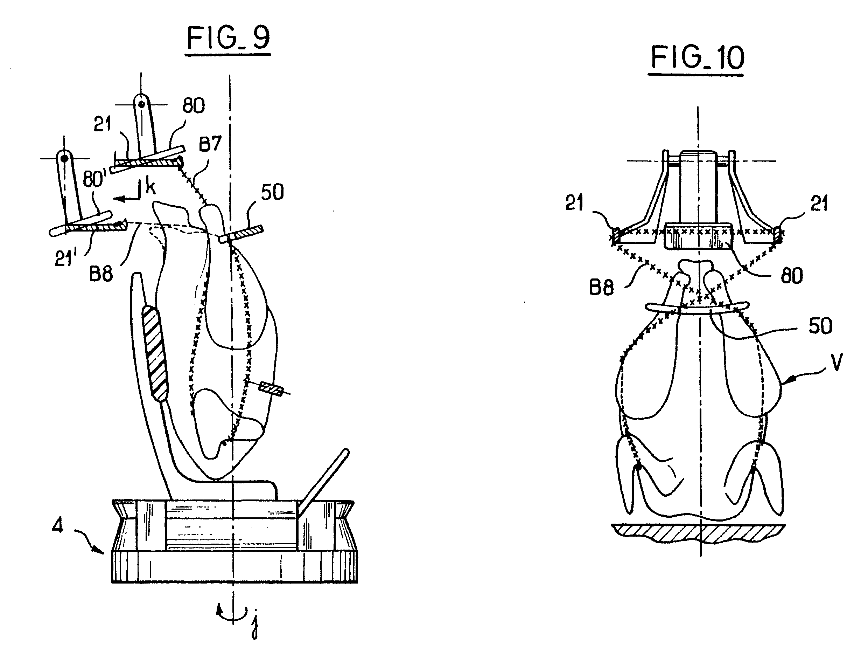

Après une certaine course d'avance des bras 21, ceux-ci se trouvant à peu près au-dessus des pattes, le second système de commande de rotation de l'ensemble 1 provoque une nouvelle rotation de cet ensemble sur un demi-tour, dans le même sens que la rotation précédente ; cette rotation se fait alors que la bride B6 se trouve toujours retenue par la pince, ce qui provoque un croisement de la bride à ce niveau (voir figures 9 et 10). A l'issue de cette rotation, le croupion se trouve sensiblement en-dessous des bras 21 et de la plaquette 80. Cet ensemble descend alors de manière à presser le croupion vers le bas, puis recule, ce qui permet de déposer la bride au-delà du croupion. A la figure 9 on a désigné par B7 la bride avant pressage du croupion et par B8 la bride au moment du passage du croupion lorsque celui-ci est maintenu abaissé par la plaquette 80 (position figurée en traits interrompus). Le mouvement de la pince est figuré par la flèche k. Le mouvement de recul de la pince est alors combiné avec un mouvement de descente, de sorte que la pince, référencée 21′ relâche alors la bride, celle-ci venant automatiquement prendre appui à l'arrière du croupion. Le bridage conforme au schéma de la figure 2e est donc alors réalisé.

Le mouvement du dispositif se continuant, les chemins de came 570 et 580 réalisent d'une part un basculement de la mâchoire 50 qui relâche les pattes, et un basculement du bras 5 dans le sens de l'ouverture, ce qui autorise l'enlèvement de la volaille bridée V. Une plaquette éjectrice peut d'ailleurs être prévue au poste de chargement - déchargement pour faciliter cette opération.

Au cours du retrait de la mâchoire 50, les deux doigts 51 de la mâchoire ont la faculté de se déplacer légèrement (flèches l, figure 3, ce qui leur permet de ne pas accrocher la bride croisée préalablement posée qui recouvre partiellement la mâchoire (voir figure 10).

L'ensemble de contention se trouvant à l'état ouvert peut ensuite recevoir la bride de volaille suivante en vue d'une opération similaire.

Un butée appropriée est prévue qui fait automatiquement relever la plaquette 80′ lorsque la pince 20 regagne sa position basse initiale.

Au lieu de monter les dispositifs dans une installation de type tourniquet, il va de soi qu'on pourrait les monter sur un convoyeur à trajectoire autre que circulaire, par exemple sur des chaînes ayant des portions de trajectoire rectilignes.

Pour faciliter la pause des brides sur les socles, il serait possible de prévoir un poste de déchargement distinct du poste de chargement, et de prévoir entre les deux postes un poste intermédiaire de mise en place de la bride. A ce poste pourrait être prévu par exemple un organe de stockage des brides qui aurait l'allure d'un cône creux, dont le sommet serait tourné vers le haut, et sur lequel seraient empilées des brides. Au poste intermédiaire, le cône descendrait au-dessus du socle 4 en recouvrant l'ensemble de contention vide 1, de telle sorte que la base du cône vienne coïncider à peu près avec la gorge 40. Il suffirait alors à l'opérateur de faire glisser légèrement la bride inférieure vers le bas pour que celle-ci vienne se loger dans la gorge 40. Le cône serait ensuite automatiquement relevé de manière à libérer l'ensemble de contention 1, celui-ci étant alors prêt à recevoir la volaille à brider.

**Revendications**

1. Procédé de bridage industriel de volailles préalablement abattues et plumées, au moyen d'une bride en forme de boucle souple et élastique, selon lequel :

    a) on place la volaille (V) dans un ensemble de contention (1), en position dressée, partie avant tournée vers le bas, pattes et croupion dirigés vers le haut, ledit ensemble de contention (1) étant fixé sur un socle (4) qui peut tourner autour d'un axe vertical (Z-Z′) coïncidant approximativement avec l'axe longitudinal de la volaille (V), ce socle retenant la bride (B) de sorte que celle-ci ait la configuration d'une boucle située dans un plan sensiblement horizontal et entourant ledit axe vertical (Z-Z′) ;

    b) on immobilise la volaille dans ledit ensemble de contention (1) ;

    c) on saisit au moyen d'une pince (20) la zone de la bride (B) qui est située du côté dorsal ;

    d) on écarte la pince (20) du socle (4) en la faisant monter de façon à faire passer la bride (B) sous les ailes en la tirant vers le haut ;

    e) on place la zone de bride saisie au-dessus du croupion, contre l'abdomen et l'arrière des cuisses ;

    f) on lâche la bride (B) ;

    g) on fait pivoter le socle (4) d'un demi-tour autour de son axe (Z-Z′) ;

    h) on saisit, au moyen de la même pince (20), la partie opposée de la bride toujours retenue au niveau du socle (4), côté ventral ;

    i) on écarte la pince (20) du socle (4) en la faisant monter de façon à emprisonner les ailes, et on l'amène au-dessus de la volaille (V), sensiblement à l'aplomb du croupion et de l'extrémité des pattes ;

    j) la bride étant toujours maintenue par la pince (20), on fait pivoter le socle (4) d'un demi-tour autour de son axe (Z-Z′) de manière à croiser la bride (B) sur les pattes ;

    k) on place la zone de bride saisie à l'arrière du croupion de manière à enserrer celui-ci en même temps que les extrémités des pattes ;

    l) on lâche la bride (B) ;

    m) on retire la volaille (V) bridée de l'ensemble de contention (1).

2. Procédé selon la revendication 1, selon lequel la volaille (V) se trouve en appui dans l'ensemble de contention par sa face dorsale et y est immobilisée au moyen d'une mâchoire (50) s'appliquant contre les pattes.

3. Procédé selon la revendication 2, selon lequel l'immobilisation de la volaille (V) est complétée par une broche (55) qui pénètre dans l'ouverture du bréchet.

4. Procédé selon la revendication 2, selon lequel avant l'étape (g), on déplace la mâchoire (50) pour resserrer les pattes contre le corps de la volaille.

5. Procédé selon la revendication 1, selon lequel avant l'étape (k), on presse le croupion vers le bas.

6. Dispositif de bridage industriel de volailles préalablement abattues et plumées, au moyen d'une bride en forme de boucle souple et élastique, caractérisé en ce qu'il comprend d'une part un ensemble de contention (1) apte à retenir la volaille en position dressée, partie avant tournée vers le bas, pattes et croupion dirigés vers le haut, cet ensemble de contention étant porté par un socle (4) qui peut tourner autour d'un axe vertical (Z-Z′) coïncidant approximativement avec l'axe longitudinal de la volaille (V), ce socle (4) étant adapté pour retenir une bride élastique (B) en forme de boucle dans un plan sensiblement horizontal de façon que la boucle entoure ledit axe vertical (Z-Z′), et d'autre part un ensemble manipulateur (2) qui est mobile verticalement et horizontalement par rapport audit berceau-support (1) et comporte une pince (20) apte à saisir et retenir une certaine zone de ladite bride (B).

7. Dispositif selon la revendication 6, caractérisé en ce que ledit ensemble de contention (1) comporte un berceau-support (3) apte à soutenir la volaille (V) en position dressée, et muni d'une garniture d'appui dorsal (30).

8. Dispositif selon l'une des revendications 6 ou 7, caractérisé en ce que ledit ensemble de contention (1) comporte un bras pivotant (5) qui est articulé sur un axe horizontal (502) au niveau du socle (4) et qui porte une mâchoire (50) adaptée pour s'appliquer contre les pattes de la volaille (V).

9. Dispositif selon la revendication 8, caractérisé en ce que ladite mâchoire (50) est articulée sur le levier (5) autour d'un axe horizontal (501).

10. Dispositif selon l'une des revendications 8 ou 9, caractérisé en ce que ladite mâchoire (50) comporte deux doigts indépendants articulés (51) formant un "V", sollicités par un ressort (511) dans le sens de la fermeture du "V".

11. Dispositif selon l'une des revendications 8 à 10, caractérisé en ce que ledit bras pivotant (5) porte une broche (55) apte à s'engager dans l'ouverture du bréchet de la volaille (V).

12. Dispositif selon l'une des revendications 6 à 11, caractérisé en ce que le socle (4) a un contour généralement circulaire et présente une gorge périphérique (40) de retenue de la bride (B), des découpes (41) étant prévues à sa périphérie qui permettent à la pince (20) de saisir la bride (B).

13. Dispositif selon l'une des revendications 6 à 12, caractérisé en ce que ladite pince (20) a la forme d'un étrier en "U" dont les bras (21) sont disposés horizontalement et présentent une encoche (22) de retenue de la bride (B).

14. Dispositif selon la revendication 13, caractérisé en ce que l'ensemble manipulateur (2) comporte une plaquette (80) articulée sur la pince (20) et apte à venir s'appliquer contre le croupion de la volaille (V) pour presser celui-ci vers le bas.

15. Dispositif selon l'une des revendications 6 à 14, caractérisé en ce que lesdits ensembles de contention (1) et manipulateur (2) sont portés par un équipage mobile (9) se déplaçant en circuit fermé, des chemins de came fixes disposés le long de sa trajectoire assurant les différents mouvements du dispositif au cours de l'opération de bridage.

16. Installation de bridage industriel de volailles qui comporte une pluralité de dispositifs identiques conformes à la revendication 15, portés par un équipage commun (9).

FIG.1

EP 0 425 400 A1

FIG. 2a

FIG. 2b

FIG. 2c

FIG. 2d

## FIG. 2e

## FIG. 3

## FIG. 4

## FIG.5a

## FIG.5

## FIG.6

FIG_7

FIG_8

EP 0 425 400 A1

FIG_9

FIG_10

EP 0 425 400 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-2 522 475 (SPECIAL MANUTENTION) <br> * le document en entier * <br> — — — | 1,6,15 | A 22 C 21/00 |
| A | US-A-2 842 443 (RICE) <br> — — — | | |
| D,A | US-A-3 509 594 (KLIEWER) <br> — — — | | |
| A | FR-A-2 485 336 (STORK) <br> — — — | | |
| A | GB-A-1 372 985 (ARMOUR AND COMPANY) <br> — — — — — | | |

**DOMAINES TECHNIQUES RECHERCHES (Int. Cl.5)**

A 22 C
B 65 B

Le présent rapport de recherche a été établi pour toutes les revendications

| Lieu de la recherche | Date d'achèvement de la recherche | Examinateur |
|---|---|---|
| La Haye | 16 janvier 91 | DE LAMEILLIEURE D. |